# EUROPEAN PATENT SPECIFICATION

(11) **EP 3 100 993 B1**
(45) Date of publication and mention of the grant of the patent: **08.01.2020**
(21) Application number: 14881311.6
(22) Date of filing: 28.01.2014
(51) Int. Cl.: C04B 38/02, C04B 22/10

(54) **LOW-DENSITY CERAMIC COMPOSITION AND USE OF PRODUCT PRODUCED THEREFROM**
KERAMISCHE ZUSAMMENSETZUNG MIT GERINGER DICHTE UND VERWENDUNG EINES DARAUS HERGESTELLTEN PRODUKTS
COMPOSITION CÉRAMIQUE À FAIBLE DENSITÉ, UTILISATION DU PRODUIT OBTENU À PARTIR DE CELLE-CI

(43) Date of publication of application: 07.12.2016
(73) Proprietor: Ceilook, SL, 12180 Cabanes Castellón (ES)
(72) Inventor: PIQUER MARTÍ, Joaquín, E-12200 Castellón (ES); VIVONA, Daniel, E-12560 Castellón (ES)
(74) Representative: Sahuquillo Huerta, Jesús
(86) International application number: PCT/ES2014/070060
(87) International publication number: WO 2015/114175

(56) References cited:
- WO-A1-2007/126178
- WO-A1-2010/035603
- WO-A1-2012/107599
- WO-A1-2013/137727
- WO-A2-03/064348
- DE-A1- 4 038 491
- LV-B- 12 402
- DATABASE WPI Week 199138 Thomson Scientific, London, GB; AN 1991-276324 XP002771430, & HU T56 329 A (SZEREPI F) 28 August 1991 (1991-08-28)

## Description

This invention refers to a low-density ceramic or ceramic material composition used to manufacture high porosity fired parts or tiles, conferring a low apparent density to these. Specifically, the sintered composition is comprised of elements of the +2-valency group and silicon-aluminates that contain +1 valency group oxides in the appropriate proportions to prevent an increase in the apparent density of the finished part.

This invention also refers to both to the use of the sintered composition for the manufacture of ceramic tiles for lining façades, roofs and walls as well as the use of the composition as a structural element in the making of ceramic-polymer or ceramic-metal composites.

Therefore, the field of use of this invention is the construction industry, particular for the industrial sector of the ceramics and chemical fries and ceramic glazes, but it is similarly applicable in any other field in which a ceramic composition is requires with the features that are the object of this invention.

### Background of the invention

There are many patents and articles around the world, which refer to the obtaining of this type of ceramic products. However, none use a composition like the one described in this patent. Of the existing patents to produce light high-porosity ceramics, it is worth highlighting the following procedures:
Obtaining of light ceramic by adding of organic material, which on breaking down when fired allows low densities to be obtained. Within this patent family it is worth highlighting patent No. US 5,177,036 by Kunst, where lignite is added together with the clay, so that after shaping the part the lignite breaks down in the firing process, thus obtaining a light or low-density ceramic part. Within this line of work one can encounter patent No. KR 20040003201 by CHAE YEONG, where anthracite is added as a material required for the formation of internal porosity. Finally within this section we can mention patent LV12402 from the University of Riga and patent JP11246279 by Kenmoku Seizo , which refer to the introduction of oxidising material arising from the waste of the polishing process or the waste from incinerators, as a precursor material required for internal porosity for the decrease of the apparent density of the fired product.

None of this technology and know-how to produce low-density ceramic tiles, facilitates the shaping by pressing. These parts shaped by pressing, which are subsequently decorated by applying enamels, tend to display the appearance of the so-called "Black heart" defect, due to an excess of organic material and a lack of oxygen in the firing air. The referred "Black heart" defect lead to deformities in the parts and flaws in their surface finish.

Obtaining of light ceramic by adding low-density raw materials. In general, these raw materials must be of a volcanic origin. In this patent family it is worth highlighting patent No. US 5,827,457 by Tseng, the adding of an expandable volcanic mineral such as obsidian, perlite or pumice. Patent US 5,033,721 by Gnyra describes the addition of unground vermiculite as a low-density material that allows light parts to be obtained, with the purpose of increasing heat insulation as well as resistance to high temperatures and chemical attack. Patent No. US 6,664,205 includes perlite as an essential component for obtaining low-density ceramic material with the object of acting as an acoustic insulator over a wide range of frequencies. Patent No. KR 930011276 includes zeolite and agalmatolite as materials required for the obtaining ceramics of low-density and a high degree of mechanical and chemical resistance.

However, in this invention we do not include this type of raw materials to obtain low-density ceramic tiles, as the main purpose is to allow the creation of tiles with current production processes and especially by pressing. The materials described above have a high internal porosity, which gives them a low density. When these materials are subjected to a grinding and subsequently, a pressure for the formation of the ceramic pieces, the internal porosity of the materials is partially closed. This occlusion produces an increase in the density of the shaped material and makes it difficult to attain such low apparent densities as those described in this invention.

Obtaining of light tiles by the forming of ceramic foams. In patent No. US 5,015,606 by Lang, it describes the obtaining of low-density ceramic products by the calcination of ceramic foams, obtained by mixing clays with surfactants. Within this line of work there is patent No. KR 20030044733 by Kim Yun Ju where a surfactant is added to the ceramic casting slip for the subsequent shaping. Finally, it is worth mentioning patent DE 1934855, which uses sodium or ammonium bicarbonate and/or ammonium carbonate as foaming material. These materials are mixed at a percentage no higher than 6% with ceramic materials, soluble alkaline silicates and water. By heating at temperatures below 300°C, the bubbling occurs due to the breaking down of the sodium or ammonium bicarbonates or the ammonium carbonate, which gives rise to a foam. To confer a certain degree of manoeuvrability to the foam, soluble alkaline silicates activated by compounds, such as among others, silicic acid, are used. Thanks to the consistency derived from usage of alkaline silicates, the foams can be moulded (not pressed) and fired at high temperatures. The use of this process for making low-density ceramics involves a degree of limitation in the shaping of the parts. The use of foams, decreases the density to very low values but limits its shaping, particularly by pressing and they prevent its subsequent manipulation and decoration with inorganic enamels using the current glazing lines. Using pressure to shape the parts, would involve the elimination of the internal porosity, with which the desired low-density effect would be lost.

Obtaining of light tiles using a low temperature reaction. In this family it is worth highlighting patent No. KR 19910018075 by Kim Su-Tae, which initially propose a calcination of carbonate at high temperature to eliminate the carbon dioxide. The product of this calcination is treated with ammonium bicarbonate so that it will react at a low temperature (equal or less than 150°C). This patent allows for parts to be obtained at a low temperature, although such parts cannot be decorated using traditional glazes or nanoparticles at normal working temperatures (greater than 800°C). Therefore, although it is a valid alternative for obtaining low-density parts, it limits their decoration processes.

Obtaining light-weight tiles by breaking down of inorganic materials during the firing process. Method encompassed in patent PCT/ES2011000022 by Piquer and Vivona, whereby the adding of bicarbonates, it allows a rapid decomposition during calcination of the ceramic composition producing a low-density part, with the added advantage that it can be shaped by pressing processes. The presence of a high quantity of bicarbonate leads to an excessive composition cost, moreover, as is mentioned in the patent, the excessive increase in carbonates of the +2-valency group together with the presence of alkaline bicarbonates, causes a decrease in the dimensional stability of the parts. Another defect detected in this invention, is the presence of a high content of soluble salts which migrate to the surface of the granule, constituting a limitation to the storage time of the granules.

Obtaining of light tiles whose compositions have high content of earth alkali carbonates. Using this technology is patent US 20020037798. This patent is based on the use of compounds of boron (B₂O₃). The high presence of an element refractory, such as the carbonates of the +2 group, have the difficulty of displaying solubility at normal working temperatures. This patent includes the use of boron compounds, with the aim of creating liquid phases that insolubilize the compounds of the +2 group (CaO, SrO, BaO and MgO), in addition to other heavy elements. However, the development of a liquid phase with very low viscosity causes an unwanted increase in density, both if the input of B₂O₃ comes from a raw material or a firing process. This invention avoids having to use this type of flux that increase the apparent density of the sintered part.

Thus, it can be seen from the status documents of the previous technique, that although they offer possibilities, they do not effectively solve the problem obtaining a low-density ceramic material that allows the use of the usual existing processes to manufacture low-density components in, thus offering great versatility.

### Detailed description of the invention

This invention refers to a low-density ceramic composition according to claim 1 that allows for obtaining low-density ceramic parts in firing. The main technical advantage of this composition is that it can be made and decorated using the usual production systems for ceramic tiles and allows for the shaping of the ceramic parts by pressing. In the claims 2-5 it is disclosed particular embodiments of the composition according with the claim 1.

In the composition that is the object of this invention raw materials are added with high loss by calcination comprised of carbonates that are elements of the +2 valency group, mainly carbonates of calcium, strontium, barium, and/or magnesium, where the sum of the percentages of these carbonates is of between 40% and 70% by dry weight of the total composition.

These carbonates of the +2-valency group displayed a high degree of refractoriness and are combined silicon aluminates with oxides with a +1 valency (Na2O, K2O, Li2O). They are mainly alkali feldspars that provide the appropriate percentage of oxides of a +1 valency in order to reduce or prevent the leaching of heavy oxides and oxides of the +2 group (mainly CaO or MgO), without increasing the apparent density of the final part.

This invention includes low but significant percentages of oxides of the +1 group, so that the sum of these percentages varies between 10% and 60% by dry weight of the alkaline silicon aluminates. The aim is to develop a low liquid phase during the firing process of the ceramic base, since this liquid phase closes the internal porosity of the parts, with the resulting densification of these, which is an undesirable effect.
For the object of this invention, "elements with a +2 valency" are understood to be such atoms, elements, molecules or chemical groups that have lost two electrons and that, therefore, have a valency or valency number of +2, such as alkaline earth elements.

For this invention the terms "ceramic composition", "ceramic paste" or "ceramic material" shall be used interchangeably.

Moreover, the materials mentioned above, are combined with natural and/or synthetic raw materials and additives (organic and inorganic binders) that are suitable for allowing the shaping of the ceramic part.

The ceramic raw materials include degreasing or plastic materials that are involved in the total composition in a percentage of up to 50% of the dry weight.

The composition of the claim 1 allows to obtain a low-density ceramic part allows shaping and decorating using current manufacturing systems and particularly shaping by pressing. Thus, it is possible to obtain geometries and formats that are unfeasible and present a high degree of difficulty were they to be obtained using other shaping systems such as casting or extruding.

In fact, if we analyse the results of the documents previously mentioned in the precedents section, the inventors of this invention observed that the results obtained are not optimal, both from a technical and from an economic point of view, for the shaping of parts using the pressing system.

The composition according with the claims allows for using high percentages of calcium and/or magnesium carbonates maintaining an adequate dimensional stability. Specifically, these carbonates are combined into a percentage greater than 40% and generally greater than 50% with feldspars containing oxides of elements belonging to the +1 group, where the alkali feldspars input are in percentages of between 10% and 60%, although they are usually of between 20% and 30%.

Moreover, the composition may include one more degreaser or plastic materials of a natural and/or synthetic origin, such as clays, kaolin, feldspars and silicon aluminates that contain oxides with a valency other than +1, silicates, carbonates of elements with a valency other than +2, bicarbonates, oxides and hydroxides of these elements, phosphates, borates, glazes, ceramic dyes and ceramic additives (polyacrylates, polyols, cellulose derivatives, derivatives of naphthalene, lignosulphonates, saccharides and polysaccharides, silicates, phosphates, phosphonates, polycarboxylates and amino acids).

The advantage of incorporating adding inorganic raw materials with high losses for calcination is the absence of the "Black heart" effect, which causes many problems in the production system.

Another advantage derived from the composition of the raw material itself, it being relevant to indicate that the low-density ceramic composition obtained has a water absorption of between 20% and 50%.

Advantageously, the decrease in the density of the composition during compaction is caused by the calcination of the inorganic raw materials that constitute it and thus it is possible to shape the piece by pressing.

On the other hand, in other cases, the low density of the composition is due to the internal structure of the raw material that has a high degree of internal porosity. This internal porosity is eliminated by applying the system of shaping by pressing, as the pressure exerted on the powder, occludes the internal porosity that exists between the particles and in the inside of these.

Therefore, in these cases the shaping system for manufacturing ceramic parts cannot be pressing and it will be necessarily to use others such as casting or extruding, with the disadvantages that this entails.

Finally, it should be emphasised that the ceramic composition according to the claim 1 allows to be fired at a temperature greater than 1100°C and preferably above 1150°C, whereas the use of the mentioned low-density ceramic composition is the manufacture of ceramic parts with low density and weight, which ideally suited for installation on the ground, walls, and especially on roofs and which can also be used as structural elements for the making of ceramic-polymer or ceramic-metal composites.

### Examples of practical application

The following specific examples provided here serve to illustrate the nature of this invention. These examples are only for illustrative purposes and should not be interpreted as a limitation to the invention as claimed here.

### Example 1

Initially the different raw materials are weighed and their percentages by weight are shown below:

| | |
|---|---|
| Kaolin | 24.0% |
| Lithium feldspar | 25.0% |
| Calcium carbonate | 50.0% |
| Organic binder (polysaccharide) (Neos Binder 82®) | 0.5% |
| Sodium hexametaphosphate | 0.5% |

The chemical analysis of the sintered composition being the following:

| | |
|---|---|
| SiO₂ | 41.79% |
| Al₂O₃ | 16.88 |
| B₂O₃ | <0.15% |
| Fe₂O₃ | 0.24% |
| CaO | 37.73% |
| MgO | 0.16% |
| Na₂O | 1.24% |
| K₂O | 0.82% |
| TiO₂ | 0.03% |
| ZrO₂ | <0.01% |
| BaO | <0.01% |
| Li₂O | 0.35% |
| PbO | <0.01% |
| ZnO | <0.01% |
| HfO₂ | <0.01% |
| P₂O₅ | 0.58% |
| SrO | 0.03% |
| Mn | 0.01% |

These raw materials were wet ground to attain a degree of grinding whose rejection at 63 microns was equal to or less than 2%.

The resulting slip was dried by pulverising using an industrial atomiser, until reaching a moisture of the atomised powder of between 6 and 6.5%.

Subsequently, granules were pressed at a specific pressure of 100 Kg/cm² to achieve an apparent density of the dry and shaped part of 1600 Kg/m³.

To accentuate the decrease of the weight of the part without decreasing its maximum thickness, in addition to using the composition of this invention, it was proceeded to do the pressing with a rib (rear side of the part) which displayed a heavy relief.

Thus, ceramic parts were obtained in a format of 600x600 mm with a thickness of 8mm.

After shaping the part went through the drying process until a residual humidity less than 0.2% was attained. In this stage, a vertical industrial dryer with two burners was used, the maximum temperature of the second burner being of 175°C. The time inside the dryer was of 90 minutes between it going in and coming out.

At this stage the organic binder exerts on the particles the appropriate grip in order to increase the mechanical strength of the part (MOR) from values of 4.0 Kg/cm² after the shaping up to values of 27.0 Kg/cm² after drying.

The resulting parts were decorated using inkjet systems.

Finally, the parts were fired in an industrial oven, using a 60-minute cycle (from cold zone to cold zone), reaching a maximum temperature of 1190°C.

As a result, the parts are ceramics decorated on a substrate, whose apparent density in firing is less than 1250 Kg/m³ and generally lower than 1190 Kg/m³ and with a breakage modulus of 17 N/mm².

The resulting parts were subjected to specific tests for their installation on roofs with the following results:

| | |
|---|---|
| Nominal thickness: | 8.2 mm |
| Nominal dimensions: | 600 x 600 mm |
| Weight: | 10.2 Kg/m2 |
| Reaction to firing: | A.1 |
| Thermal conductivity coeff.: | 0.31 W/m K |
| Acoustic absorption coeff.: | 0.25 |
| Steam resistance factor: (as per UNE-EN (12086:1998)) | 19 µ |
| Water absorption: (as per UNE-EN (12086:2013)) | 32% |

Moreover, it must be indicated that the mechanical strength of shaped and dry part increases due to the adding of organic and inorganic additives to the composition. These additives create union points between the particles, either through chemical bonds or by melting at low temperature. The mentioned bonds increase the mechanical strength up to values that facilitate the manipulation of the parts during the process of decoration or impregnation of nanoparticles.

Bear in mind that in this example binding polysaccharides have been used, however among the possible binders that can also be used one should highlight sulphonates, celluloses, acrylics, silicates, phosphates or a mixture of these, although it is feasible to use other types of binders (formaldehydes, caseins, etc.)

### Example 2

Initially the different raw materials are weighed and their percentages by weight are shown below:

| | |
|---|---|
| Bentonite | 10.0% |
| Sodium feldspar (14% Na2O) | 40.0% |
| Calcium carbonate | 50.0% |
| Organic binder (derivative of naphthalene) (Neos Binder 600®) | 0.5% |
| Sodium hexametaphosphate | 0.5% |

These raw materials were wet ground to attain a degree of grinding whose rejection at 63 microns was equal to or less than 2%.

The resulting slip was dried by pulverising using an industrial atomiser, until reaching a moisture of the atomised powder of between 6 and 6.5%.

Subsequently, granules were pressed at a specific pressure of 100 Kg/cm2 to achieve an apparent density of the dry and shaped part of 1755 Kg/m3.

After shaping the part went through the drying process until a residual humidity less than 0.2% was attained. In this stage, a vertical industrial dryer with two burners was used, the maximum temperature of the second burner being of 175°C. The time inside the dryer was of 90 minutes between it going in and coming out.

At this stage the organic binder exerts on the particles the appropriate grip in order to increase the mechanical strength of the part (MOR) from values of 3.2 Kg/cm2 after the shaping up to values of 24.2 Kg/cm2 after drying.

The resulting parts were decorated using inkjet systems.

Finally, the parts were fired in an industrial oven, using a 60-minute cycle (from cold zone to cold zone), reaching a maximum temperature of 1150°C.

As a result, the parts are ceramics decorated on a substrate, whose apparent density in firing is less than 1330 Kg/m3 and with a water absorption of 34% as per UNE-EN (14411:2103).

The purpose of this invention lies in the use of these low density and weight parts for installation in floors, walls and especially on roofs. Advantageously, the ceramic composition of this invention can be shaped by pressing, giving it greater raw mechanical strength compared with other types of shaping systems (casting or extruding).

Moreover, the adding of organic and inorganic binders increases said mechanical strength even more, which allows for easier of the part, both in decoration processes as well as in its raw machining processes.

Another advantage of this invention is the possibility of reducing the firing cycles in comparison with other reported method types, as the low-density of the ceramic composition is obtained by the combustion of inorganic products. In this sense it should be indicated that when preparing ceramic pastes with high contents of organic material, the firing cycles must be slow, in order to facilitate the combustion and degasification of the organic material, as a diffusion of oxygen is required into the inside of the part for the calcination of the organic component to be carried out.

Another advantage of this invention is the possibility of it entirely being formulated using raw materials of a natural origin, avoiding the use of synthetic materials. In this sense, it is necessary to highlight that the adding of synthetic materials in high percentages, substantially increase the final cost of the composition, decreasing their possibilities of getting to market.

Finally, advantageously, the low content of soluble salts present in the invention, that allows for the elimination of the problems associated with the migration of these during the storage period of the granules.

## Claims

1. A ceramic composition comprising the combination of:
carbonates of alkaline earth elements of valence +2;
alkaline silicon aluminates that contain oxides of valence +1;
natural or synthetic degreasing or plastic materials selected from: clays, kaolins, feldspars and silicon aluminates that contain oxides with a valence other than +1, silicates, carbonates of elements with a valence other than +2, bicarbonates, oxides and hydroxides of these elements, phosphates, borates, glazes, ceramic dyes and ceramic additives;
wherein the carbonates of alkaline earth elements of valence +2 are between 40% and 70% of the total dry weight of the composition; the alkaline silicon aluminates that contain oxides of valence +1 are between 10% and 60% of the total dry weight of the composition; and the natural or synthetic materials are up to 50% of the total dry weight of the composition.

2. The ceramic composition of claim 1 wherein the ceramic additives are selected from: polyacrylates, polyols, cellulose derivatives, derivatives of naphthalene, lignosulphonates, saccharides and polysaccharides, silicates, phosphates, phosphonates, polycarboxylates and amino acids.

3. The ceramic composition of claim 1 wherein the carbonates of alkaline earth elements are combined into a percentage greater than 50% with alkali silicon aluminates that contain oxides of valence +1 in a percentage between 20% and 30% of the total dry weight of the composition.

4. The ceramic composition of claim 3 wherein the alkali silicon aluminates are alkali feldspars.

5. The ceramic composition as per the above claims, wherein it displays a water absorption rate of between 20% and 50%.

## Patentansprüche

1. Keramische Zusammensetzung, umfassend die Kombination von:
Carbonate von Erdalkalielementen der Wertigkeit +2;
alkalische Siliciumaluminate, die Oxide der Wertigkeit +1 enthalten;
natürliche oder synthetische Entfettungs- oder Kunststoffmaterialien, ausgewählt aus: Tonen, Kaolinen, Feldspänen und Siliciumaluminaten, die Oxide mit einer anderen Wertigkeit als +1 enthalten, Silikaten, Carbonaten von Elementen mit einer anderen Wertigkeit als +2, Bicarbonaten, Oxiden und Hydroxiden dieser Elemente Phosphate, Borate, Glasuren, keramische Farbstoffe und keramische Zusätze;
die Carbonate der Erdalkalielemente der Wertigkeit +2 machen zwischen 40% und 70% des Gesamttrockengewichts der Zusammensetzung aus; die alkalischen Siliciumaluminate, die Oxide der Wertigkeit +1 enthalten, machen zwischen 10% und 60% des Gesamttrockengewichts der Zusammensetzung aus; und die natürlichen oder synthetischen Materialien machen bis zu 50% des Gesamttrockengewichts der Zusammensetzung aus.

2. Keramische Zusammensetzung nach Anspruch 1 bezüglich der keramischen Zusätze ausgewählt aus: Polyacrylaten, Polyolen, Cellulosederivaten, Derivaten des Naphthalins, Ligninsulfonaten, Sacchariden und Polysacchariden, Silikaten, Phosphaten, Phosphonaten, Polycarboxylaten und Aminosäuren.

3. Keramische Zusammensetzung nach Anspruch 1 bezüglich der Carbonate von Erdalkalielementen werden zu einem Prozentsatz von mehr als 50% mit Alkalisiliciumaluminaten kombiniert, die Oxide der Wertigkeit +1 in einem Prozentsatz zwischen 20% und 30% des Gesamttrockengewichts von enthalten die Zusammensetzung

4. Keramische Zusammensetzung nach Anspruch 3 bezüglich der Alkalisiliciumaluminate sind Alkalifeldspate.

5. Keramikzusammensetzung nach den vorstehenden Ansprüchen, wobei sie eine Wasserabsorptionsrate zwischen 20% und 50% aufweist.

## Revendications

1. Une composition de céramique comprenant la combinaison de :
carbonates d'éléments alcalino-terreux de valence +2 ;
les aluminates de silicium alcalins contenant des oxydes de valence +1 ;
matières de dégraissage ou de matière plastique naturelles ou synthétiques choisies parmi: argiles, kaolins, feldspaths et aluminates de silicium contenant des oxydes de valence autre que +1, des silicates, des carbonates d'éléments de valence autre que +2, des bicarbonates, des oxydes et des hydroxydes de ces éléments , phosphates, borates, glaçures, colorants céramiques et additifs céramiques ;
respectivement les carbonates d'éléments alcalino-terreux de valence +2 sont compris entre 40% et 70% du poids sec total de la composition; les aluminates de silicium alcalins contenant des oxydes de valence +1 représentent entre 10% et 60% du poids sec total de la composition; et les matériaux naturels ou synthétiques représentent jusqu'à 50% du poids sec total de la composition.

2. Les compositions céramiques de la revendication 1 concernant les additifs céramiques sont choisies parmi: les polyacrylates, les polyols, les dérivés de la cellulose, les dérivés du naphtalène, les lignosulfonates, les saccharides et les polysaccharides, les silicates, les phosphates, les phosphonates, les polycarboxylates et les acides aminés.

3. Composition de céramique selon la revendication 1 concernant les carbonates d'éléments alcalino-terreux combinés en un pourcentage supérieur à 50% avec des aluminates de silicium alcalins contenant des oxydes de valence +1 en pourcentage compris entre 20% et 30% du poids sec total de la composition

4. Composition de céramique selon la revendication 3 concernant les aluminates de silicium alcalins sont des feldspaths alcalins.

5. La composition céramique selon les revendications ci-dessus, alors qu'elle présente un taux d'absorption d'eau compris entre 20% et 50%.
